# EUROPÄISCHE PATENTSCHRIFT

(11) **EP 3 334 318 B1**
(45) Veröffentlichungstag und Bekanntmachung des Hinweises auf die Patenterteilung: **07.06.2023**
(21) Anmeldenummer: 16762966.6
(22) Anmeldetag: 10.08.2016
(51) Int. Cl.: A47J 37/07, F24B 3/00

(54) **FEUERKORB**
BRAZIER
PANIER DE COMBUSTION

(30) Priorität: 10.08.2015 DE 202015005487 U
(43) Veröffentlichungstag der Anmeldung: 20.06.2018
(73) Patentinhaber: Kaiser, Thomas, 87463 Schrattenbach (DE); Wassermann, Christian, 87647 Kraftisried (DE)
(72) Erfinder: Kaiser, Thomas, 87463 Schrattenbach (DE); Wassermann, Christian, 87647 Kraftisried (DE)
(74) Vertreter: Gille Hrabal Partnerschaftsgesellschaft mbB Patentanwälte
(86) Internationale Anmeldenummer: PCT/EP2016/001371
(87) Internationale Veröffentlichungsnummer: WO 2017/025192

(56) Entgegenhaltungen:
- US-A- 1 298 762
- US-A- 2 920 614
- US-A- 3 167 040
- US-A- 3 318 300
- US-A- 3 318 300
- US-A- 3 617 022
- US-A1- 2003 129 558
- US-A1- 2012 174 798
- US-A1- 2014 261 010

## Beschreibung

Die Erfindung betrifft einen Feuerkorb zur Verbrennung von Holz und ähnlichen Brennstoffen, mit den oberbegrifflichen Merkmalen des Anspruchs 1.

Derartige Feuerkörbe werden im Außenbereich (Garten, Terrasse, usw.) in Art eines mobilen Lagerfeuers eingesetzt. So ist aus der DE 202 10 747 U1 ein "topfförmiger" Feuerkorb mit einer Grillauflage bekannt, der einen geschlitzten Mantel aufweist, damit ausreichend Luft an den Brennstoff gelangt. Problematisch ist hierbei jedoch, dass auch Glutpartikel aus dem Feuerkorb herausfallen können, so dass auf einen feuerfesten Untergrund (Steinplatten, Kies, etc.) zu achten ist, um Brandschäden zu vermeiden. Dies gilt auch für das erlöschende Feuer, z. B. nach Ende einer Gartenparty, wobei der Feuerkorb meist ohne Aufsicht ist und selbst ohne neuen Brennstoff erneut aufflackern kann, insbesondere bei Wind. Zudem ist die Entsorgung der Feuerreste z. B. am nächsten Tage recht mühsam, da der Boden des Feuerkorbs relativ niedrig liegt und somit nur mühsam zu reinigen ist. Dies gilt auch für einen Holzkohleanzünder gemäß der US 3,167,040 oder einen Ofen gemäß der US 3,318,300, wobei das Feuer durch Sand gelöscht wird, welcher dann mühsam zu entsorgen ist.

Ein Feuerkorb gemäß dem Stand der Technik ist aus der US 3 617 022 A bekannt.

Daher soll ein derartiger Feuerkorb hinsichtlich Sicherheit und Handhabung verbessert werden.

Diese Aufgabe wird gelöst durch die Merkmale des Anspruchs 1. Vorteilhafte Ausführungen sind Gegenstand der Unteransprüche.

Der vorgeschlagene Feuerkorb kann relativ preisgünstig und stabil, insbesondere aus Stahlblech hergestellt werden und ist auch als Grill im Freien einsetzbar. Dabei können in die Außenwand des so geformten Korbs für das Brenngut auch Firmenlogos etc. eingestanzt oder eingeschnitten werden. Durch die schwenkbare Lagerung der bevorzugt tiefgezogenen Feuerschale wird der Untergrund vor Brandschäden geschützt. Durch die nach unten hin geschlossene Form der vertieften Feuerschale kann zudem das Feuermaterial nicht aus dem Feuerkorb herausfallen. Auch die Benutzer sind hierbei vor Brandverletzungen weitgehend geschützt. Durch die schwenkbar gelagerte Feuerschale wird zudem nach dem Betrieb des Feuerkorbs eine sichere Abkühlung der Feuerreste erzielt, wobei die noch verbleibende Glut durch das "Umkippen" des Korbs um 180° bzw. "Überkopf" von diesem am Umfang sicher ummantelt wird, so dass Funkenflug oder ein Auflodern praktisch ausgeschlossen werden kann.

Überraschend wurde dabei gefunden, dass der nach dem Kippen obenliegende Korb die Feuerschale praktisch vollständig ummantelt und den noch schwelenden Brennstoff erstickt. Auch bei nicht 100%-Abdichtung der Randspalten sinkt das entstehende Kohlenmonoxid nach unten und sperrt somit die Luftzufuhr zur Feuerschale und dem Brennstoff darin ab. Da auch Tischlampen oder sog. Teelichter diesen Aufbau aufweisen, ist die Erfindung auch auf solche Lampen oder Leuchten anwendbar, da auch sie kleiner dimensionierte Feuerschalen bilden, auch wenn sie meist mit Öl oder Wachs als holzähnliche Brennstoffe betrieben sind.

Aufgrund der am Korb vorgesehenen Öffnungen oder Durchbrüche wird im Betrieb des Feuerkorbs der angenehme Eindruck eines offenen Feuers geschaffen. Nach dem Umkippen des bevorzugt quaderförmigen Korbs dienen die dann untenliegenden Durchbrüche der Abkühlung der Feuerschale und der darin befindlichen Feuerreste. Dies kann relativ rasch erfolgen, da die Korb und die Feuerschale aus Stahlblech, ggf. auch aus Edelstahl oder Aluminium bestehen, zumal die Feuerschale bevorzugt konisch oder kegelförmig tiefgezogen ist und somit eine große Abkühlflache (nach Erlöschen des Feuers) bietet.

Für die spätere Reinigung des Feuerkorbs, z. B. am nachfolgenden Tag, weist die Feuerschale bevorzugt zwei Handgriffe auf, so dass diese leicht aus dem Korb herausgenommen und bequem separat gesäubert werden kann. Vorzugsweise sind an diesem Feuerkorb (nahe den Handgriffen) Lageraugen mitangeformt, die ein einfaches Herausheben der Feuerschale dienen und zugleich die Schwenklagerung der Feuerschale bilden.

Zusätzlich kann der Feuerkorb bzw. dessen mantelförmiger Korb mit einem Deckel am oberen Ende verschlossen werden, der insbesondere eine Sitzfläche ausbildet. Am in Betriebsstellung unteren Ende des Feuerkorbs sind stirnseitig bevorzugt zwei Stützleisten vorgesehen, die kostengünstig am Korb in Form von Abkantungen einstückig angeformt sind, also z. B. beim Ausstanzen des Korbblechs mithergestellt werden. Die Stirnseite des Korbs kann auch weitgehend geschlossen sein oder komplett, um so den in Löschstellung dann obenliegenden Boden zu bilden, auf dem das Kohlenmonoxid trifft und dann absinkt, um das Feuer letztlich ohne Zusatzstoffe zu löschen. Die Stützleisten verlaufen dabei parallel zu der im mittleren Höhenbereich des Korbs angeordneten Schwenklagerung der Feuerschale, so dass diese in Art einer Schaukel auch beim Umkippen um diese Kante bzw. Achse immer in horizontaler Lage bleibt, ohne dass Brennstoff herausfällt.

Durch die beiden Stützleisten an entgegengesetzten Seitenwänden wird zudem im unteren Bereich des Feuerkorbs ein Abstand zum Boden geschaffen, so dass die Brennluftzufuhr von dieser teilweise offenen Unterseite des als Kamin wirkenden Korbs aus zu einem umlaufenden Spalt zwischen der Innenseite des Korbs und dem Außenumfang der Feuerschale zum darin aufgestapelten Brennmaterial gleichmäßig erfolgen kann. Zudem wird dadurch der Abstand zum Untergrund vergrößert, so dass z. B. eine Holzterrasse nicht übermäßig aufgeheizt wird. Somit wird eine sichere Befeuerung erzielt, die auch für Grillzwecke einsetzbar ist. So kann auf den Korb eine Grillauflage aufgesetzt werden, insbesondere in Rostform oder auch eine Steinplatte. Um den Abstand zur Glut in der Feuerschale zu steuern, kann die Grillauflage zur Höheneinstellung in höhenversetzten Durchbrüchen eingesteckt werden.

Durch die "abgekanteten" Stützleisten können auch mehrere Feuerkörbe säulenartig übereinander gestapelt werden, wobei die Stützleisten für einen formschlüssigen Eingriff sorgen, so dass auf diese Weise relativ hohe, aber stabile Säulen errichtet werden können, um z. B. die Ausleuchtung durch dann in mehreren Ebenen brennende Feuer zu steigern. Dies ergibt gerade bei größeren Abendveranstaltungen besondere Beleuchtungseffekte durch die "offenen" Feuer auf mehreren Ebenen, ebenso eine angenehme Wärmeentwicklung z. B. in 0,7 und 1,4 Meter Höhe vom Erdboden, gerade bei kühleren Außentemperaturen. Zudem können die Feuerkörbe in platzsparender Weise aufgestapelt gelagert werden.

Weitere Vorteile der Erfindung ergeben sich aus der nachfolgenden Beschreibung eines Ausführungsbeispiels anhand der Zeichnungen. Hierbei zeigen:
Fig. 1 eine perspektivische Darstellung eines Feuerkorbes in zwei Stellungen,
Fig. 2 eine Perspektivansicht des Feuerkorbs gemäß Fig. 1 beim Überführen aus seiner Betriebsstellung in eine gekippte Feuer-Löschstellung,
Fig. 3 eine Innenansicht des Feuerkorbs;
Fig. 4 eine Perspektivansicht des Feuerkorbes mit einem Grillrost,
Fig. 5 Perspektivansichten mit zwei aufeinander gestapelten Feuerkörben, und
Fig. 6 eine weitere Darstellung eines als Tischlampe abgewandelten Feuerkorbs.

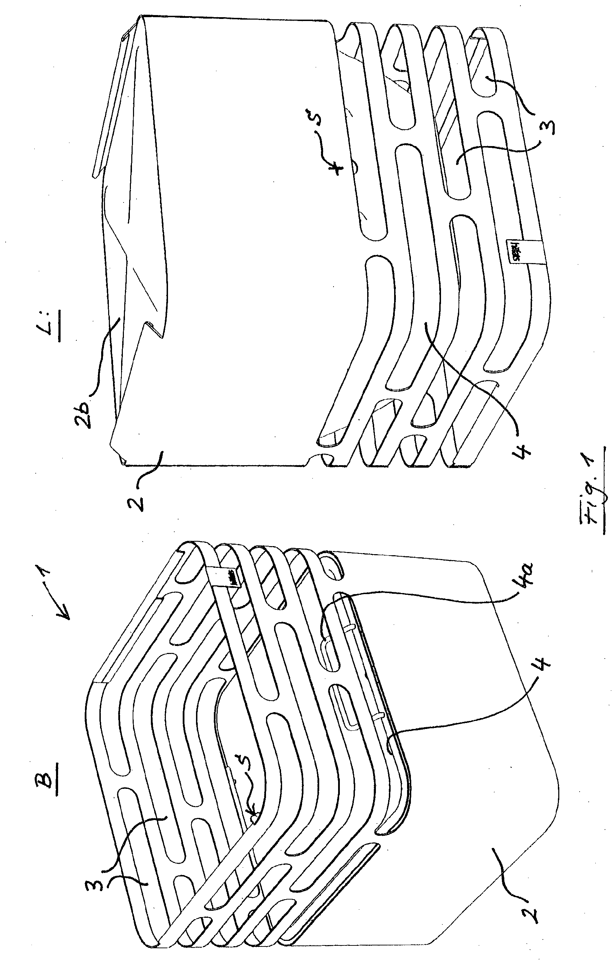

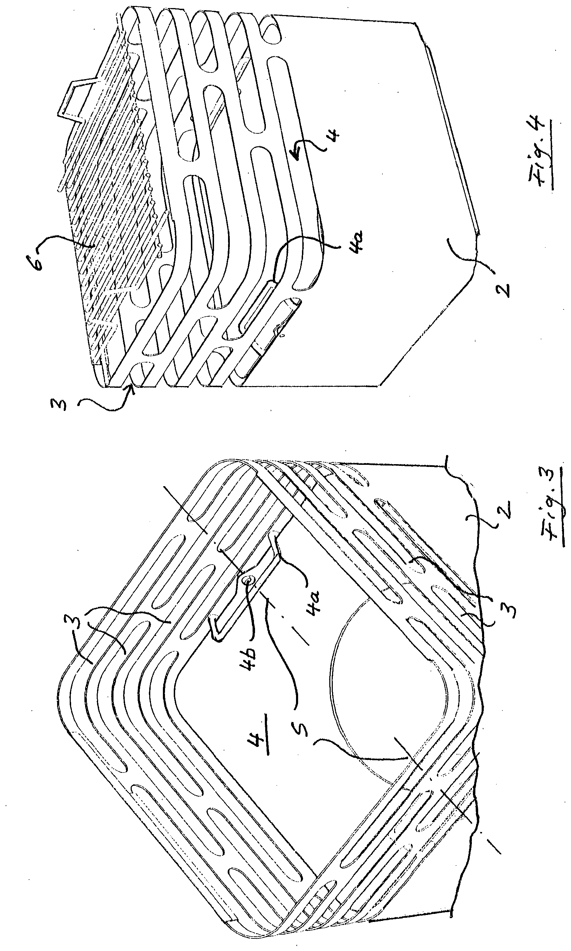

Fig. 1 zeigt einen Feuerkorb 1 zur Verbrennung von Holz und/oder ähnlichen Brennstoffen (wie z. B. Grillkohle) und besteht aus einem hier quaderförmigen Korb 2, der eine Feuerschale 4 umfasst bzw. umgibt. Der bevorzugt aus Metall, wie Stahlblech geformte Korb 2 weist in seinem hier oberen Bereich eine Vielzahl von (ausgestanzten) Durchbrüchen 3 auf, so dass das in der Feuerschale 4 brennende Holz gut sichtbar ist und die Umgebung beleuchten bzw. erwärmen kann. Die Durchbrüche 3 dienen auch dazu, dass z. B. Kinder nicht in die offene Flamme greifen können sowie teils zur Brennluftzuführung. Ein Großteil der Brennluft wird jedoch am unteren Bereich des Korbes 2 angesaugt, der somit in Art eines Kamins wirkt, da zwischen der Innenseite des im unteren Bereich weitgehend geschlossenen Korbs 2 und dem Außenumfang der Feuerschale 4 (mit dem darin gestapelten Brennmaterial) ein umlaufender Spalt für Zuluft vorgesehen sein kann, der für eine gleichmäßige Verbrennung sorgt. Die Luftzufuhr erfolgt dabei bevorzugt benachbart zu zwei Stützleisten 2a an entgegengesetzten Seitenwänden des Korbs 2, da im unteren Bereich des Feuerkorbs 1 ein Abstand zur Stellfläche (z. B. Erdboden) eingehalten wird. Somit wird eine sichere Befeuerung erzielt, die auch für Grillzwecke einsetzbar ist (vgl. Fig. 4 mit einer rostförmigen Grillauflage).

Der Korb 2 bzw. seine Wandung ist hier kubusförmig ausgebildet und besteht bevorzugt aus einem Stahlblech, in dessen hier oberen Hälfte die Durchbrüche 3 eingestanzt oder durch Laser od. dgl. eingearbeitet sind. Hierdurch ergibt sich eine stabile Bauweise des Korbs 2, der auch als Umfassung für die darin gelagerte Feuerschale 4 dient. Die Feuerschale 4 weist eine etwas geringere Grundfläche auf (vgl. den o.g. umlaufenden Spalt), um so innerhalb des Korbes 2 in Art einer Schaukel schwenken zu können. Dazu ist eine z. B. mit zwei Bolzen gebildete Schwenklagerung S vorgesehen, deren Schwenkachse (vgl. Fig. 3) in etwa halber Höhe des Korbs 2 parallel zu den Stützleisten 2a ausgerichtet ist. Somit kann der Feuerkorb 1 aus seiner hier links dargestellten Betriebsstellung (B), in der das Feuer zur Erzeugung von Hitze und/oder Licht brennt, "Überkopf" in eine Feuer-Löschstellung (L), hier rechts, gekippt werden. Dabei bleibt die Feuerschale 4 (hier durch die Schlitze 3 hindurch erkennbar) immer in pendelnder, horizontaler Lage, so dass kein Brennmaterial herausfallen kann. In der Löschstellung L erhält der Brennstoff in der Feuerschale 4 keine oder kaum mehr Zuluft, so dass das Feuer erstickt. Dabei dient bevorzugt ein Boden 2b als Abdeckhaube, so dass sich über der Feuerschale 4 praktisch nur noch Abgase (Kohlenmonoxide) befinden und das Feuer rasch ersticken.

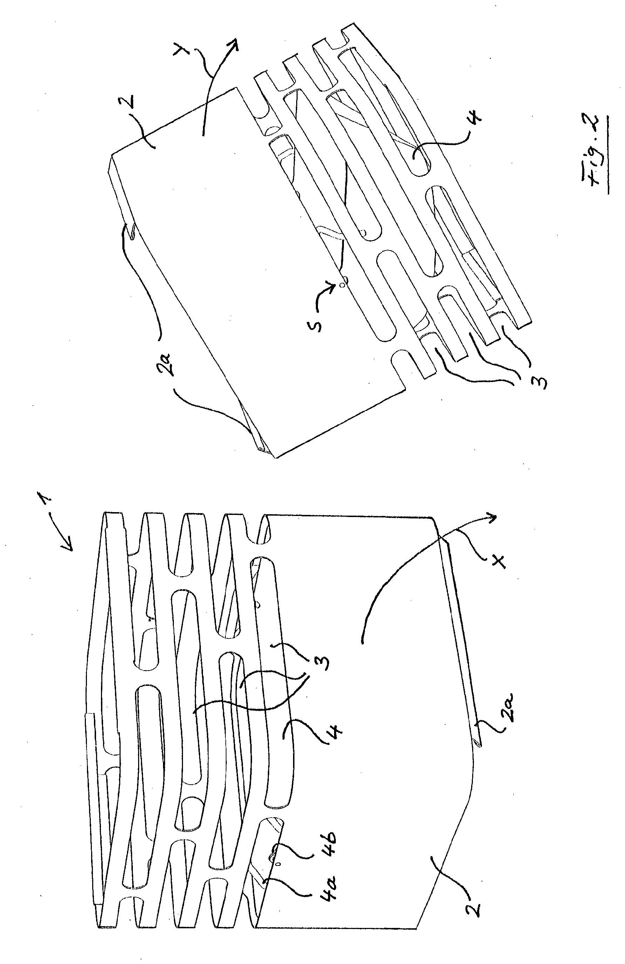

In Fig. 2 ist das Kippen des Feuerkorbs 1, bevorzugt um ca. 180° gezeigt. So kann der links dargestellte Korb 2 (ähnlich der Position B in Fig. 1) an seinem unteren Ende gegriffen werden, bevorzugt an einer der Stützleisten 2a und um die andere Stützleiste 2a um 90° gekippt werden (Pfeil X). Somit wird eine Seitenwand des Korbes 2 kurzzeitig zum Boden. Bei weiterem Kippen in die gleiche Richtung ergibt sich dann die Stellung gemäß Fig. 2 (mit hier ca. 150° Kippwinkel gegenüber der Betriebsstellung in Fig. 1) und schließlich beim Absenken auf eine Unterlage die Position L (selbsttätige Löschstellung) gemäß Fig. 1.

Aus Fig. 2 mit der dort gezeigten Zwischenstellung wird ersichtlich, dass die Feuerschale 4 wie eine Schaukel oder Wiege immer in horizontaler Ausrichtung bleibt, also das Feuermaterial oder die Glut nicht verloren geht. Wird das Kippen des Feuerkorbs 1 gegenüber der Stellung in Fig. 2 um weitere 30° fortgeführt, wie mit dem Pfeil Y angedeutet, steht der Korb 2 dann auf dem mit den Durchbrüchen 3 versehenen "offenen" Bereich (vgl. Fig. 1, rechte Hälfte). Hierdurch wird die trichterförmige Feuerschale 4 von unten her gekühlt (natürliche Luftströmung oder Wind), während die Oberseite der Feuerschale 4 von dem (weitgehend) geschlossenen, nun oben liegenden Bereich (boden 2b) des Korbes 2 umschlossen ist. Somit ist auch bei Wind kein von der verbliebenen Glut ausgehender Funkenflug zu befürchten. Vielmehr erstickt der Rauch im nun als "Abdeckhaube" dienenden Korb 2 das Feuer sehr rasch. Außerdem kann dann ggf. einsetzender Regen die Feuerschale 4 mit Glutresten nicht durchtränken oder verkleben, so dass die Reinigung z. B. am nächsten Tage wesentlich erleichtert wird. Hierzu dienen auch Handgriffe 4a (vgl. auch Fig. 3) an der Feuerschale 4, die bevorzugt als Drahtbiegeteil geformt sind und etwa mittig Lageraugen 4b zur schwenkbaren Lagerung der Feuerschale 4 um die Schwenkachse der Schwenklagerung S bilden. An den Handgriffen 4a kann die Feuerschale 4 zur Entleerung der Asche leicht aus dem Korb 2 entnommen werden.

In Fig. 3 ist eine Ansicht ins Innere des Feuerkorbs 1 von oben her gezeigt, wobei insbesondere einer der Handgriffe 4a und ein Lagerauge 4b der Schwenklagerung S erkennbar sind. In Fig. 4 ist wiederum die Betriebsstellung analog zu Fig. 1 gezeigt, wobei auf dem Korb 2 eine Grillauflage 6 aufgesetzt ist, insbesondere in Rostform. Die Grillauflage 6 kann zur Höheneinstellung in unterschiedlichen Durchbrüchen 3 eingesteckt werden, also z. B. bei höherem Hitzebedarf auf eine der unteren Reihen umgesetzt werden.

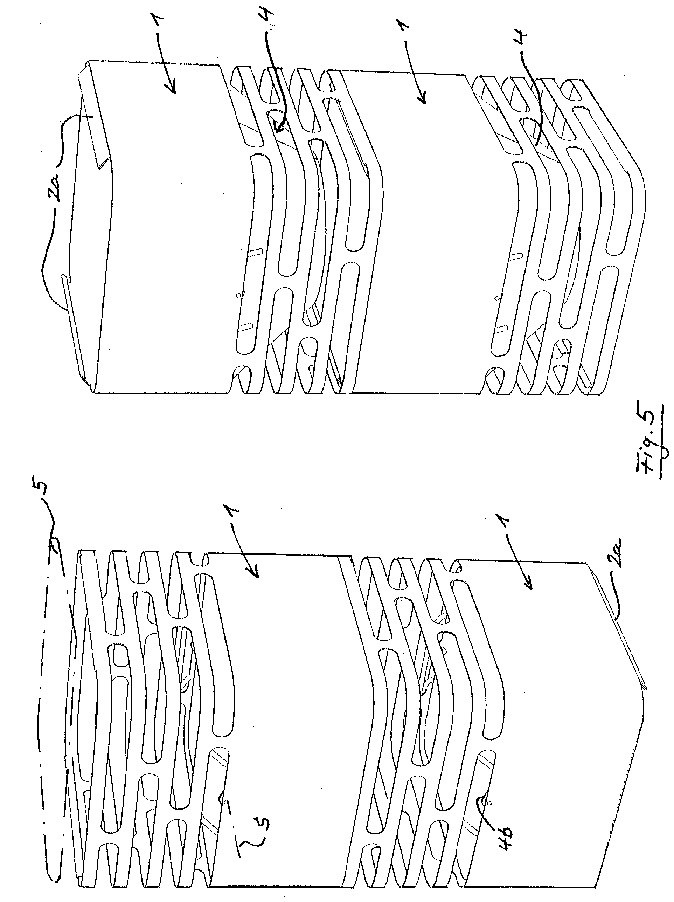

In Fig. 5 sind zwei Feuerkörbe 1 übereinander gestapelt, wobei auf den oberen Korb 2 ein Deckel 5 aufgelegt werden kann, der z. B. eine erhöhte Sitz- oder auch Tischfläche ausbildet, während in der rechten Hälfte zwei der oben beschriebenen Feuerkörbe 1 in umgekehrter Orientierung säulenartig übereinander gestapelt sind. Wie erwähnt, sind diese durch die abgekanteten Stützleisten 2a formschlüssig positioniert, so dass sich eine stabile Säule (z. B. auch zur Lagerung) ergibt. Der vorstehend erwähnte Deckel 5 kann auch auf der Stirnseite mit den Stützleisten 2a angebracht werden, wobei der Deckel 5 in Art einer Schwalbenschwanzführung zwischen den Stützleisten 2a eingeschoben werden kann. Hierdurch ergibt sich eine exakte Positionierung. Bei der Stapelstellung gemäß Fig. 5 wird wegen der Durchbrüche 3 oberhalb der jeweilige Feuerschale 4 eine erhöhte Beleuchtungswirkung und auch Wärmeabstrahlung erzielt, wie dies an kühleren Abenden erwünscht ist.

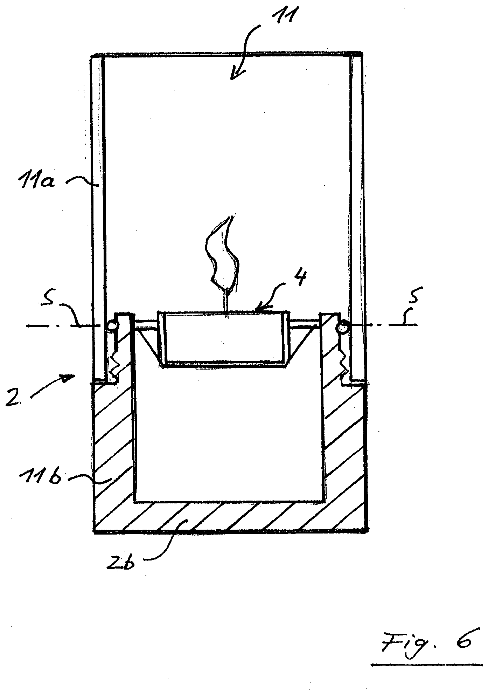

Diese erhöhte Beleuchtungswirkung wird auch oft bei sog. Teelichtern verlangt, die auch als Tischlampen eingesetzt werden, also einen "kleinen" Feuerkorb darstellen. Dabei ist der (in Betriebstellung) obere Bereich 11a meist als Glasrohr ausgeführt, wie dies in Fig. 6 dargestellt ist. Der untere Bereich 11b des Teelichts 11 (als kleine Ausführung des Feuerkorbs 1) ist aus Gründen der Standsicherheit meist aus schwerem Metall oder massiver Keramik, wobei beide Elemente 11a,b zur Bildung des vorbeschriebenen Korbs 2 über eine Steckverbindung oder auch ein Gewinde verbunden sind. An der Trennebene ist hier wiederum eine Feuerschale 4 vorgesehen, die an einer Schwenklagerung S pendelnd gelagert ist. In der Feuerschale 4 ist hier eine Wachsschale eingesetzt, die an einem Docht angezündet wird und die hier skizzierte Flamme erzeugt.

Zum Löschen der Flamme wird das Teelicht 11 wie der Feuerkorb 1 "Überkopf" gedreht, nämlich um die Achse der Schwenklagerung S, so dass sich das Glasrohr 11a unten befindet und der Bereich 11b oben. Die Feuerschale 4 vollzieht dieses Kippen in unverändert horizontaler Lage mit, so dass die Flamme dann auf den (geschlossenen) Boden des Elements 11b trifft und - wie oben für Fig. 1 bis 5 beschrieben - aus Luftmangel dann rasch erlöscht. Dieses Prinzip lässt sich auch Stehleuchten (vgl. Fig. 5 mit erhöhter Lichtwirkung) oder Wand- bzw. Hängelampen anwenden, wobei zum Erlöschen das Lampengehäuse bzw. der Korb 2 Überkopf gedreht wird, jedoch die darin gelagerte Feuerschale 4 in horizontaler Lage verbleibt. Somit kann als Brennstoff auch Öl verwendet werden, das in die Feuerschale 4 eingefüllt ist (z. B. bei historischen Festen). Da das Schwenken um die Achse der Schwenklagerung S bei zylindrischen Grundformen manchmal nicht exakt einzuhalten ist, sollte das Öl nur bis zur halben Füllhöhe eingefüllt werden. Durch die bevorzugte Parallelausrichtung der Schwenklagerung S zu einer Seitenkante des (quaderförmigen) Korbes 2, insbesondere einer Stützleiste 2a, lässt sich die Kippbewegung (vgl. Pfeile X und Y in Fig. 2) jedoch sehr exakt durchführen, so dass auch größere Füllhöhen möglich sind, ohne Brennstoff aus der Feuerschale 4 zu verschütten.

## Patentansprüche

1. Feuerkorb zur Verbrennung von Holz und ähnlichen Brennstoffen, mit einem weitgehend topfförmigen Korb (2) mit einem Boden (2b) und mit einer Feuerschale (4), wobei die Feuerschale (4) am Korb (2) relativ zu diesem schwenkbar gelagert ist,
**dadurch gekennzeichnet, dass**
der Korb (2) aus der Betriebsstellung in eine Überkopf-Feuer-Löschstellung kippbar ist, wobei in Löschstellung der nach oben gekippte Korb (2) mit seinem Überkopf liegenden Boden (2b) als das Feuer erstickende Abdeckhaube dient.

2. Feuerkorb nach Anspruch 1, **dadurch gekennzeichnet, dass**
der Korb (2) mehrere Durchbrüche (3) aufweist.

3. Feuerkorb nach Anspruch 1 oder 2, **dadurch gekennzeichnet, dass**
der Korb (2) quaderförmig ausgebildet ist.

4. Feuerkorb nach einem der Ansprüche 1 bis 3, **dadurch gekennzeichnet, dass**
die Feuerschale (4) vorzugsweise konisch oder kegelförmig tiefgezogen ist.

5. Feuerkorb nach einem der Ansprüche 1 bis 4, **dadurch gekennzeichnet, dass**
die Feuerschale (4) Handgriffe (4a) aufweist.

6. Feuerkorb nach Anspruch 5, **dadurch gekennzeichnet, dass**
die Schwenklagerung (S) der Feuerschale (4) benachbart zu den Handgriffen (4a) angeordnet ist, insbesondere an der Feuerschale (4) mitangeformt ist.

7. Feuerkorb nach einem der Ansprüche 1 bis 6, **dadurch gekennzeichnet, dass**
der Korb (2) mit einem Deckel (5) verschließbar ist, der insbesondere eine Sitzfläche ausbildet.

8. Feuerkorb nach einem der Ansprüche 1 bis 7, **dadurch gekennzeichnet, dass**
der Korb (2) stirnseitig Stützleisten (2a) aufweist, die insbesondere einstückig angeformt sind.

9. Feuerkorb nach einem der Ansprüche 1 bis 8, **dadurch gekennzeichnet, dass**
zwischen der Innenseite des Korbs (2) und dem Außenumfang der Feuerschale (4) ein umlaufender Spalt vorgesehen ist, insbesondere zur Brennluftzufuhr von der teilweise offenen Unterseite des Korbs (2).

10. Feuerkorb nach einem der Ansprüche 1 bis 9, **dadurch gekennzeichnet, dass**
auf den Korb (2) eine Grillauflage (6) aufsetzbar ist, insbesondere in Rostform.

11. Feuerkorb nach Anspruch 2 und 10, **dadurch gekennzeichnet, dass**
die Grillauflage (6) zur Höheneinstellung in unterschiedlichen Durchbrüchen (3) einsetzbar ist.

12. Feuerkorb nach einem der Ansprüche 8 bis 11, **dadurch gekennzeichnet, dass**
mehrere Feuerkörbe (1) säulenartig übereinander stapelbar sind und insbesondere von den Stützleisten (2a) formschlüssig positioniert sind.

13. Feuerkorb nach einem der Ansprüche 1 bis 8, **dadurch gekennzeichnet, dass**
der Feuerkorb (1) in Art eines Teelichts (11), einer Stehleuchte oder Hängelampe ausgebildet ist,

14. Feuerkorb nach Anspruch 13, **dadurch gekennzeichnet, dass**
in der Feuerschale (4) als Brennstoff Öl oder Wachs eingefüllt ist, wobei insbesondere mittig ein Docht zum Anzünden des Feuers vorgesehen ist,

15. Feuerkorb nach einem der Ansprüche 1 bis 14, **dadurch gekennzeichnet, dass**
der Korb (2) aus Metall oder Keramik besteht, insbesondere mit einem angeformten, geschlossenen Boden (2b),

## Claims

1. Fire basket for burning wood and similar fuels, comprising a substantially pot-shaped basket (2) with a bottom (2b) and with a fire bowl (4), wherein the fire bowl (4) is mounted on the basket (2) pivotable relative thereto,
**characterized in that**
the basket (2) is tiltable from the operating position into an overhead fire extinguishing position, wherein in the extinguishing position the upwardly tilted basket (2) with its overhead-lying bottom (2b) serves as a fire-smothering cover hood.

2. Fire basket according to claim 1, **characterized in that**
the basket (2) has a plurality of openings (3).

3. Fire basket according to claim 1 or 2, **characterized in that**
the basket (2) is cuboidal.

4. Fire basket according to one of the claims 1 to 3, **characterized in that**
the fire bowl (4) is preferably conically or cone-shaped deep-drawn.

5. Fire basket according to one of the claims 1 to 4, **characterized in that**
the fire bowl (4) comprises handles (4a).

6. Fire basket according to claim 5, **characterized in that**
the pivotable mounting (S) of the fire bowl (4) is arranged adjacent to the handles (4a), in particular is integrally formed on the fire bowl (4).

7. Fire basket according to one of the claims 1 to 6, **characterized in that**
the basket (2) is closeable with a lid (5), which in particular forms a seating surface.

8. Fire basket according to one of the claims 1 to 7, **characterized in that**
the basket (2) has support strips (2a) on the end face, which are in particular integrally formed.

9. Fire basket according to one of the claims 1 to 8, **characterized in that**
a circumferential gap is provided between the inner side of the basket (2) and the outer circumference of the fire bowl (4), in particular for the supply of combustion air from the partially open underside of the basket (2).

10. Fire basket according to one of the claims 1 to 9, **characterized in that**
a grill top (6) can be placed on the basket (2), in particular in grate form.

11. Fire basket according to claim 2 and 10, **characterized in that**
the grill top (6) can be inserted in different apertures (3) for height adjustment.

12. Fire basket according to one of the claims 8 to 11, **characterized in that**
a plurality of fire baskets (1) can be stacked one on top of the other in a columnar manner and, in particular, are positioned in a form-fitting manner by the support strips (2a).

13. Fire basket according to one of the claims 1 to 8, **characterized in that**
the fire basket (1) is designed in the manner of a tea light (11), a floor lamp or hanging lamp.

14. Fire basket according to claim 13, **characterized in that**
oil or wax is filled in the fire bowl (4) as fuel, wherein in particular a wick is provided centrally for lighting the fire.

15. Fire basket according to one of the claims 1 to 14, **characterized in that**
the basket (2) consists of metal or ceramic, in particular with an integrally formed, closed bottom (2b).

## Revendications

1. Corbeille à feu pour la combustion de bois et de combustibles similaires, avec une corbeille (2) largement en forme de pot avec un fond (2b) et avec une coupe à feu (4), la coupe à feu (4) étant montée sur la corbeille (2) de manière à pouvoir pivoter par rapport à celle-ci,
**caractérisée en ce que**
la corbeille (2) peut être basculée de la position de service dans une position d'extinction du feu au-dessus de la tête, dans laquelle, dans la position d'extinction, la corbeille (2) basculée vers le haut sert avec son fond (2b) situé au-dessus de la tête de capot de couverture étouffant le feu.

2. Corbeille à feu selon la revendication 1, **caractérisée en ce que** la corbeille (2) présente plusieurs percées (3).

3. Corbeille à feu selon la revendication 1 ou 2, **caractérisée en ce que** la corbeille (2) est de forme parallélépipédique.

4. Corbeille à feu selon l'une quelconque des revendications 1 à 3, **caractérisée en ce que** la coupe à feu (4) est de préférence emboutie de manière conique ou en forme de cône.

5. Corbeille à feu selon l'une quelconque des revendications 1 à 4, **caractérisée en ce que** la coupe à feu (4) présente des poignées (4a).

6. Corbeille à feu selon la revendication 5, **caractérisée en ce que** le palier de pivotement (S) de la coupe à feu (4) est disposé à proximité des poignées (4a), en particulier est co-moulé sur la coupe à feu (4).

7. Corbeille à feu selon l'une quelconque des revendications 1 à 6, **caractérisée en ce que** la corbeille (2) peut être fermée par un couvercle (5), qui forme en particulier une surface d'assise.

8. Corbeille à feu selon l'une quelconque des revendications 1 à 7, **caractérisée en ce que** la corbeille (2) présente frontalement des barres de soutien (2a), qui y sont en particulier moulées d'une seule pièce.

9. Corbeille à feu selon l'une quelconque des revendications 1 à 8, **caractérisée en ce qu'**une fente périphérique est prévue entre le côté intérieur de la corbeille (2) et le pourtour extérieur de la coupe à feu (4), en particulier pour l'alimentation en air de combustion depuis le côté inférieur partiellement ouvert de la corbeille (2).

10. Corbeille à feu selon l'une quelconque des revendications 1 à 9, **caractérisée en ce qu'**un support de gril (6) peut être placé sur la corbeille (2), en particulier sous forme de grille.

11. Corbeille à feu selon les revendications 2 et 10, **caractérisée en ce que** le support de gril (6) peut être inséré dans différentes percées (3) pour le réglage de la hauteur.

12. Corbeille à feu selon l'une quelconque des revendications 8 à 11, **caractérisée en ce que** plusieurs corbeilles à feu (1) peuvent être empilées les unes sur les autres à la manière de colonnes et sont en particulier positionnées à fleur de forme par les barres de soutien (2a).

13. Corbeille à feu selon l'une quelconque des revendications 1 à 8, **caractérisée en ce que** la corbeille à feu (1) est formée à la manière d'une bougie chauffe-plat (11), d'un lampadaire ou d'une lampe suspendue.

14. Corbeille à feu selon la revendication 13, **caractérisée en ce que** de l'huile ou de la cire est versée dans la coupe à feu (4) comme combustible, dans laquelle une mèche est en particulier prévue au centre pour l'allumage du feu.

15. Corbeille à feu selon l'une quelconque des revendications 1 à 14, **caractérisée en ce que** la corbeille (2) est en métal ou en céramique, en particulier avec un fond (2b) fermé moulé.
